# EUROPÄISCHE PATENTSCHRIFT

(11) **EP 3 406 873 B1**
(45) Veröffentlichungstag und Bekanntmachung des Hinweises auf die Patenterteilung: **10.03.2021**
(21) Anmeldenummer: 18173099.5
(22) Anmeldetag: 18.05.2018
(51) Int. Cl.: F01N 3/20, F01N 3/08, F01N 3/10, F01N 3/28, F01N 13/00

(54) **ABGASNACHBEHANDLUNGSSYSTEM FÜR EINEN VERBRENNUNGSMOTOR**
EXHAUST GAS PROCESSING SYSTEM FOR A COMBUSTION ENGINE
SYSTÈME DE TRAITEMENT DE GAZ D'ÉCHAPPEMENT POUR UN MOTEUR À COMBUSTION INTERNE

(30) Priorität: 22.05.2017 DE 102017111125
(43) Veröffentlichungstag der Anmeldung: 28.11.2018
(73) Patentinhaber: VOLKSWAGEN AKTIENGESELLSCHAFT, 38440 Wolfsburg (DE)
(72) Erfinder: Groenendijk, Axel, 38518 Gifhorn (DE)
(74) Vertreter: Gulde & Partner

(56) Entgegenhaltungen:
- DE-A1-102013 210 799
- US-A1- 2008 092 526
- US-A1- 2011 219 755
- US-B2- 8 646 259

## Beschreibung

Die Erfindung betrifft ein Abgasnachbehandlungssystem zur Abgasnachbehandlung der Abgase eines Verbrennungsmotors.

Die aktuelle und eine zukünftig immer schärfer werdende Abgasgesetzgebung stellen hohe Anforderungen an die motorischen Rohemissionen und die Abgasnachbehandlung von Verbrennungsmotoren. Dabei stellen die Forderungen nach einem weiter sinkenden Verbrauch und die weitere Verschärfung der Abgasnormen hinsichtlich der zulässigen Stickoxid-Emissionen eine Herausforderung für die Motorenentwickler dar. Bei Ottomotoren erfolgt die Abgasreinigung in bekannter Weise über einen Drei-Wege-Katalysator, sowie dem Drei-Wege-Katalysator vor- und nachgeschaltete weitere Katalysatoren. Bei Dieselmotoren finden aktuell Abgasnachbehandlungssysteme Verwendung, welche einen Oxidationskatalysator, einen Katalysator zur selektiven katalytischen Reduktion von Stickoxiden (SCR-Katalysator) sowie einen Partikelfilter zur Abscheidung von Rußpartikeln und gegebenenfalls weitere Katalysatoren aufweisen. Als Reduktionsmittel wird dabei bevorzugt Ammoniak verwendet. Weil der Umgang mit reinem Ammoniak aufwendig ist, wird bei Fahrzeugen üblicherweise eine synthetische, wässrige Harnstofflösung verwendet, die in einer dem SCR-Katalysator vorgeschalteten Mischeinrichtung mit dem heißen Abgasstrom vermischt wird. Durch diese Vermischung wird die wässrige Harnstofflösung erhitzt, wobei die wässrige Harnstofflösung Ammoniak im Abgaskanal freisetzt. Eine handelsübliche, wässrige Harnstofflösung setzt sind im Allgemeinen aus 32,5% Harnstoff und 67,5% Wasser zusammen.

Um nach einem Kaltstart des Verbrennungsmotors die Katalysatoren auf eine Betriebstemperatur zu bringen, ist eine möglichst motornahe Anordnung der Katalysatoren wünschenswert. Dies ist jedoch nicht immer möglich, da der Bauraum begrenzt ist. Daher werden SCR-Katalysatoren und Rußpartikelfilter oftmals in einer motorfernen Lage, insbesondere in einer Unterbodenlage eines Kraftfahrzeuges, angeordnet. Zudem wird bei derartigen Abgasnachbehandlungssystemen eine Mischstrecke benötigt, um ein Verdampfen der wässrigen Harnstofflösung und ein Freisetzen des Ammoniaks aus dieser wässrigen Harnstofflösung sowie eine Gleichverteilung über den Querschnitt des Abgaskanals zu erreichen, um lokale Konzentrationen von Ammoniak zu vermeiden. Um die Wegstrecke zwischen einem Dosiermodul zur Eindosierung der wässrigen Harnstofflösung und dem Katalysator zur selektiven, katalytischen Reduktion von Stickoxiden zu verkürzen, sind Mischelemente bekannt, welche den Abgasstrom gezielt umlenken oder für eine gezielte Verwirbelung im Abgaskanal sorgen.

Aus der US 8 646 259 B2 ist ein Abgasnachbehandlungssystem für einen Verbrennungsmotor bekannt, wobei einem Oxidationskatalysator ein Katalysator zur selektiven, katalytischen Reduktion von Stickoxiden (im Folgenden auch als SCR-Katalysator bezeichnet) nachgeschaltet ist. Dabei ist der SCR-Katalysator elektrisch beheizbar, um die Effizienz der katalytischen Reaktion zu verbessern.

Aus der DE 197 11 681 A1 ist eine katalytische Verbrennungsvorrichtung mit einem ringförmigen Katalysatorkörper für ein Heizungs- oder Trocknungssystem bekannt. Dabei wird in der katalytischen Verbrennungsvorrichtung keine Flamme erzeugt und daher tritt kein Ruß auf. Ferner sind aus dem Stand der Technik bereits ringförmige Katalysatoren mit einen zylindrischen Innenrohr und einem ringförmig das Innenrohr umschließenden Außenrohr, wobei das Innenrohr und das Außenrohr in unterschiedlichen Strömungsrichtungen durchströmt werden.

Die US 2011 / 219 755 A1 offenbart ein Abgasnachbehandlungssystem für einen Dieselmotor mit einem Oxidationskatalysator, einem Dosierelement zur Eindosierung eines Reduktionsmittels und einem dem Dosierelement nachgeschalteten SCR-Katalysator. Dabei wird der Abgasstrom stromabwärts des Oxidationskatalysator und stromaufwärts des SCR-Katalysators um 180° umgelenkt, um eine bessere Durchmischung des Reduktionsmittels mit dem Abgas zu erreichen und eine kompakte Ausführung des Abgasnachbehandlungssystems zu ermöglichen.

Aus der US 2008 / 092 526 A1 ist eine Vorrichtung zum Einbringen eines Reduktionsmittels in den Abgaskanal eines Verbrennungsmotors bekannt. Die Vorrichtung umfasst einen Abgaskanal und ein im Abgaskanal angeordnetes Verdampfungsrohr, wobei die Wandtemperatur des Verdampfungsrohr durch ein Beheizen soweit erhöht wird, dass das Reduktionsmittels verdampft, wenn es gegen die Wand des Verdampfungsrohrs trifft.

Darüber hinaus offenbart die DE 10 2013 210 799 A1 ein Abgasnachbehandlungssystem für einen Verbrennungsmotor mit einem Oxidationskatalysator, einem Partikelfilter und einem SCR-Katalysator, welche in einem gemeinsamen Gehäuse angeordnet sind, wobei der Abgasstrom stromabwärts des Oxidationskatalysator und stromaufwärts des Partikelfilters um 180° umgelenkt wird und ein Reduktionsmittel eindosiert wird. Dabei werden der Partikelfilter und der SCR-Katalysator durch den Abgasstrom und die auf dem Oxidationskatalysator entstehende Wärme aufgeheizt.

Der Erfindung liegt nun die Aufgabe zugrunde, ein Abgasnachbehandlungssystem vorzuschlagen, mit dem eine effektive Konvertierung schädlicher Abgaskomponenten möglich ist, wobei insbesondere die Effizienz eines Katalysators zur selektiven, katalytischen Reduktion von Stickoxiden verbessert wird.

Erfindungsgemäß wird diese Aufgabe durch ein Abgasnachbehandlungssystem für einen Verbrennungsmotor zur Anordnung in einer Abgasanlage des Verbrennungsmotors gemäss Anspruch 1 gelöst, welches einen ersten Katalysator und einen in Strömungsrichtung des Abgases durch die Abgasnachbehandlungsbaugruppe stromabwärts des ersten Katalysators angeordneten Katalysator zur selektiven, katalytischen Reduktion von Stickoxiden (SCR-Katalysator) umfasst, wobei der erste Katalysator als ein Ringkatalysator mit einem ersten, rohrförmigen, inneren Strömungsquerschnitt und mit einem zweiten, ringförmigen, äußeren Strömungsquerschnitt, wobei der zweite Strömungsquerschnitt den ersten Strömungsquerschnitt zumindest Abschnittsweise ummantelt, wobei der erste Strömungsquerschnitt und der zweite Strömungsquerschnitt von einem Abgasstrom des Verbrennungsmotors in entgegengesetzten Strömungsrichtungen durchströmt werden, sowie mit einem Umlenkelement, welches den Abgasstrom durch den Ringkatalysator zwischen dem ersten Strömungsquerschnitt und dem zweiten Strömungsquerschnitt umgelenkt, ferner umfassend ein Dosierelement, mit welchem ein Reduktionsmittel für den Katalysator zur selektiven, katalytischen Reduktion von Stickoxiden in die Abgasanlage eindosierbar ist, wobei zwischen dem Umlenkelement und dem Katalysator zur selektiven, katalytischen Reduktion von Stickoxiden eine Mischstrecke ausgebildet ist, und wobei in der Mischstrecke ein elektrisches Heizelement zur Aufheizung des Abgasstroms vor Eintritt in den Katalysator zur selektiven, katalytischen Reduktion von Stickoxiden vorgesehen ist.

Das Temperaturfenster für eine selektive, katalytische Reduktion von Stickoxiden ist auf einen Temperaturbereich von etwa 250°C bis 450°C begrenzt. Unterhalb dieses Temperaturbereiches fehlt die nötige Aktivierungsenergie zum Ablauf der katalytischen Reaktion, oberhalb dieses Temperaturbereiches kommt es zu einer thermischen Zersetzung des Ammoniaks, was die katalytische Reaktion ebenfalls stark einschränkt. Durch die Umlenkung des Abgasstromes in dem Ringkatalysator entsteht in dem Mischrohr eine stabile Wirbelstruktur, welche ein Verdampfen und eine Gleichverteilung des Reduktionsmittels über den Querschnitt des Abgaskanals unterstützt. Durch das elektrische Heizelement kann der Katalysator zur selektiven, katalytischen Reduktion von Stickoxiden auf den beschriebenen Temperaturbereich vorkonditioniert werden, wodurch insbesondere bei Schwachlast die Umsetzung des Stickoxide zu molekularem Stickstoff verbessert werden und somit die Wirksamkeit der Abgasnachbehandlung erhöht werden kann. Durch die Umlenkung zwischen dem äußeren Strömungsquerschnitt und dem inneren Strömungsquerschnitt in dem Ringkatalysator entsteht in dem Strömungsabschnitt stromaufwärts des Katalysators zur selektiven, katalytischen Reduktion von Stickoxiden eine stabile Wirbelstruktur, welche das Verdampfen und die Gleichverteilung des Reduktionsmittels vor Eintritt in den Katalysator zur selektiven, katalytischen Reduktion von Stickoxiden begünstigt.

Durch die in den abhängigen Ansprüchen aufgeführten Merkmale sind vorteilhafte Weiterentwicklungen und Verbesserungen des im unabhängigen Anspruch angegebenen Abgasnachbehandlungssystems möglich.

Ferner kann vorgesehen sein, dass der zweite Strömungsquerschnitt in Strömungsrichtung eines Abgases durch den Ringkatalysator stromaufwärts des ersten Strömungsquerschnitts liegt. Dabei ist in dem zweiten, äußeren ringförmigen Strömungsquerschnitt eine katalytische Struktur des Ringkatalysator, insbesondere ein Oxidationskatalysator oder ein NOx-Speicherkatalysator angeordnet. Durch die Anbindung des zweiten Strömungsquerschnitts an einen Auslass des Verbrennungsmotors ist eine besonders einfache und strömungsgünstige Anbindung des Ringkatalysators an einen Abgaskanal, welcher einen Auslass des Verbrennungsmotors mit dem Ringkatalysator verbindet möglich. Zudem kann durch diese Ausführungsform eine einfache Anbindung des Katalysators zur selektiven, katalytischen Reduktion von Stickoxiden, insbesondere eines aktiven SCR-Katalysators oder einer Partikelfilter mit einer Beschichtung zur selektiven, katalytischen Reduktion von Stickoxiden, durch geführt werden. Dabei kann das Mischrohr gerade und der Katalysator zur selektiven, katalytischen Reduktion in direkter Verlängerung des Mischrohrs angeordnet werden. Dadurch ist eine besonders strömungsgünstige Anbindung des Katalysators zur selektiven, katalytischen Reduktion an das Mischrohr möglich.

Ferner kann vorgesehen sein, dass der erste Strömungsquerschnitt des Ringkatalysators als zylindrisches Rohr ausgebildet ist, wobei der zweite, ringförmige Strömungsquerschnitt konzentrisch zu dem ersten Strömungsquerschnitt angeordnet ist. Dadurch ist eine besonders gleichmäßige Anströmung des äußeren Rings möglich, wodurch eine gleichmäßige Temperaturverteilung erreicht werden kann.

Erfindungsgemäß ist vorgesehen, dass das Umlenkelement eine Stirnseite eines Gehäuses des Ringkatalysators ausbildet, wobei das Dosierelement an der Stirnseite des Gehäuses des Ringkatalysators angeordnet ist. Durch ein Umlenkelement an einer Stirnseite des Gehäuses kann das Einströmen in das zylindrische Rohr verbessert werden. Dabei kann ein stabiler Wirbel in dem zylindrischen Rohr ausgebildet werden, welcher eine Zerstäubung und ein Verdampfen des Reduktionsmittels sowie eine Gleichverteilung über den Strömungsquerschnitt des Mischrohr vor Eintritt in den Katalysator zur selektiven, katalytischen Reduktion von Stickoxiden verbessert.

Erfindungsgemäß ist dabei vorgesehen, dass das Dosierelement konzentrisch zu dem zylindrischen Rohr an der Stirnseite des Gehäuses des Ringkatalysators angeordnet ist. Dadurch kann das Reduktionsmittel auf einfache Art und Weise in die sich ausbildende Wirbelstruktur eindosiert werden, wodurch ein schnelles und vollständiges Verdampfen des Reduktionsmittels sowie eine gute Durchmischung von Abgas und Reduktionsmittel erreicht werden können.

Erfindungsgemäß ist vorgesehen, dass das elektrische Heizelement derart an dem Ringkatalysator angeordnet ist, dass sowohl der innere Strömungsquerschnitt als auch der äußere Strömungsquerschnitt mit einem gemeinsamen Heizelement beheizbar sind. Dadurch ist eine Beheizung des ersten Katalysators und des Mischrohrs mit nur einem Heizelement möglich, wodurch der Aufwand für ein zusätzliches Heizelement vermieden wird. Dabei weist das Heizelement mehrere Heizzonen auf, sodass die Temperaturen für den ersten Katalysator und die Mischstrecke unterschiedlich eingestellt werden können. Die Heizzonen liegen dabei jeweils stromaufwärts der katalytisch wirksamen Zonen, sodass das Abgas vor Eintritt in den ersten Katalysator und vor Eintritt in den Katalysator zur selektiven, katalytischen Reduktion von Stickoxiden aufgeheizt werden kann. Dies ist insbesondere bei schwacher Teillast und nach einem Kaltstart des Verbrennungsmotors vorteilhaft, da in der schwachen Teillast und unmittelbar nach einem Kaltstart des Verbrennungsmotors ansonsten die Katalysatoren bzw. das Abgas zu kalt sind, um eine effiziente Umsetzung der Schadstoffe im Abgas zu gewährleisten. Dabei kann der Abgasstrom durch ein einziges Heizelement an zwei unterschiedlichen Stellen des Ringkatalysators beheizt werden, sodass ein zusätzliches Heizelement entfallen kann.

Ferner weist das Heizelement mehrere Heizzonen auf, sodass für den ersten Katalysator und die Mischstrecke unterschiedliche Temperaturen eingestellt werden können, wobei die Heizzonen jeweils stromaufwärts der katalytisch wirksamen Zonen des ersten Katalysators und des Katalysators zur selektiven, katalytischen Reduktion von Stickoxiden liegen.

Besonders bevorzugt ist dabei, wenn das elektrische Heizelement scheibenförmig ausgebildet ist, wobei der Durchmesser des elektrischen Heizelements im Wesentlichen dem Außendurchmesser des zweiten, ringförmigen Strömungsquerschnitts entspricht. Ein scheibenförmiges Heizelement mit einem Durchmesser, welcher im Wesentlichen dem Außendurchmesser des zweiten, ringförmigen Strömungsquerschnitts entspricht, lässt sich besonders einfach und platzsparend in den Ringkatalysator integrieren und an dem Gehäuse des Ringkatalysators befestigen. Dadurch ist eine besonders platzsparende Ausführung des Ringkatalysators möglich.

Die Erfindung wird nachfolgend anhand der zugehörigen Zeichnungen erläutert. Gleiche Bauteile oder Bauteile mit gleicher Funktion sind dabei mit den gleichen Bezugsziffern gekennzeichnet. Es zeigen:
- Figur 1: ein erstes Beispiel eines aus dem Stand der Technik bekannten Abgasnachbehandlungssystems für einen Verbrennungsmotor;
- Figur 2: ein Ausführungsbeispiel eines erfindungsgemäßen Abgasnachbehandlungssystems für einen Verbrennungsmotor;
- Figur 3: ein weiteres Beispiel eines nicht zur Erfindung gehörigen Abgasnachbehandlungssystems für einen Verbrennungsmotor;
- Figur 4: ein Beispiel eines nicht zur Erfindung gehörigen Abgasnachbehandlungssystems für einen Verbrennungsmotor, wobei das elektrische Heizelement an einem Eingang des SCR-Katalysators angeordnet ist;
- Figur 5: ein weiteres Beispiel eines nicht zur Erfindung gehörigen Abgasnachbehandlungssystems, wobei die Strömungsrichtung durch den Ringkatalysator im Vergleich zu den vorherigen Beispielen umgekehrt ist;
- Figur 6: ein weiteres Beispiel eines nicht zur Erfindung gehörigen Abgasnachbehandlungssystems, wobei der Ringkatalysator und der Katalysator zur selektiven katalytischen Reduktion von Stickoxiden in einem gemeinsamen Gehäuse angeordnet sind.

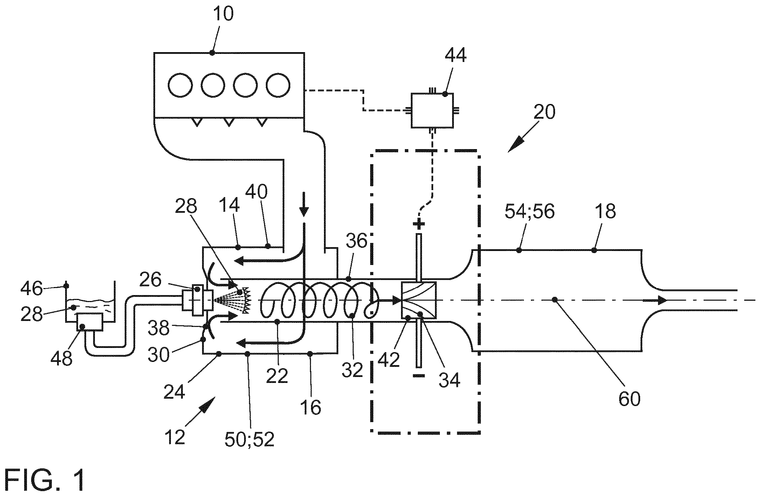

Figur 1 zeigt schematisch einen Verbrennungsmotor 10, vorzugsweise einen selbstzündenden Verbrennungsmotor, mit einer Abgasanlage 12, in der ein Abgasnachbehandlungssystem 20 angeordnet ist. Stromabwärts eines Auslasses des Verbrennungsmotors 10 sind dabei in der Abgasanlage 12 ein erste Katalysator 14 und stromabwärts des ersten Katalysator 14 ein Katalysator 18 zur selektiven, katalytischen Reduktion von Stickoxiden angeordnet. Der erste Katalysator 14 ist als Ringkatalysator 16 ausgebildet und weist einen äußeren, ringförmigen Strömungsquerschnitt 24 und einen inneren zylindrischen Strömungsquerschnitt 22 auf. Der Ringkatalysator 16 weist ein Gehäuse 40 auf, an dessen Stirnseite 38 ein Umlenkelement 30 ausgebildet ist, welches den Abgasstrom von dem äußeren, ringförmigen Strömungsquerschnitt 24 in den inneren, zylindrischen Strömungsquerschnitt 22 umlenkt. An der Stirnseite 38 ist ein Dosierelement 26 angeordnet, mit welchem ein Reduktionsmittel 28, insbesondere wässrige Harnstofflösung, in den Ringkatalysator 16 eindosiert werden kann.

Der äußere, ringförmige Strömungsquerschnitt 24 trägt eine katalytisch wirksame Struktur, insbesondere einen Diesel-Oxidationskatalysator 50 oder eine NOx-Speicherkatalysator 52. Der innere, zylindrische Strömungsquerschnitt 22 ist vorzugsweise als zylindrisches Rohr 36 ausgebildet und dient als Mischstrecke 32, um das Reduktionsmittel 28 mit dem Abgasstrom des Verbrennungsmotors 10 zu vermischen. An dem zylindrischen Rohr 36 ist ein elektrisches Heizelement 34 vorgesehen, mit welchem die Verdampfung des Reduktionsmittels 28 unterstützt werden kann und der Abgasstrom vor Eintritt in den Katalysator 18 zur selektiven, katalytischen Reduktion aufgeheizt werden kann. Dabei kann das elektrische Heizelement 42 zusätzlich die Aufgabe eines Abgasmischer 42 übernehmen, um eine verbesserte Durchmischung von Abgas und Reduktionsmittel 28 zu erreichen. Der Katalysator 18 zur selektiven, katalytischen Reduktion von Stickoxiden ist vorzugsweise als aktiver SCR-Katalysator 54 oder als Partikelfilter 56 mit einer Beschichtung zur selektiven, katalytischen Reduktion von Stickoxiden ausgebildet.

In der Abgasanlage 12 kann ferner zwischen dem Auslass des Verbrennungsmotors 10 und dem Ringkatalysator 16 eine Turbine eines nicht dargestellten Abgasturboladers angeordnet sein, welche einen Verdichter des Abgasturboladers im Ansaugkanal des Verbrennungsmotors 10 antreibt. Alternativ kann der Ringkatalysator 16 auch als sonstiger Katalysator, insbesondere bei einem Einsatz des Abgasnachbehandlungssystem 20 an einem Ottomotor, als Drei-Wege-Katalysator 58, ausgebildet sein. Das Dosierelement 26 wird von einem Fördermodul 48 mit dem Reduktionsmittel 28 versorgt, welches in einem Reduktionsmittelbehälter 46 bevorratet ist. Der innere, zylindrische Strömungsquerschnitt 22 und der äußere, ringförmige Strömungsquerschnitt 24 sind dabei konzentrisch zu einer Mittelachse 60 des Ringkatalysator 16 angeordnet. Das Dosierelement 26 und das elektrische Heizelement 34 sind dabei durch ein Steuergerät 44 zur Steuerung des Abgasnachbehandlungssystems 20, insbesondere durch eine Motorsteuergerät des Verbrennungsmotors 10 ansteuerbar.

Im Betrieb des Verbrennungsmotors 10 wird das Abgas des Verbrennungsmotors 10 durch den Ringkatalysator 16 und den Katalysator 18 zur selektiven, katalytischen Reduktion von Stickoxiden geleitet. Dabei strömt das Abgas nach Verlassen des Verbrennungsmotors 10 zunächst durch den äußeren, ringförmigen Strömungsquerschnitt 24 des Ringkatalysators 16 und wird dort durch eine katalytisch wirksame Struktur, insbesondere eine oxidativ wirksame Struktur, nachbehandelt. An der Stirnseite 36 des Gehäuses 40 wird der Abgasstrom im Wesentlichen um 180° umgelenkt, sodass das Abgas entgegen der Strömungsrichtung durch den äußeren, ringförmigen Strömungsquerschnitt 24 durch den inneren, zylindrischen Strömungsquerschnitt 22 des Ringkatalysator 16 strömt. Dabei bildet sich eine stabile Wirbelstruktur mit vorzugsweise großen, stabilen Wirbeln, welche die Verdampfung und die Vermischung des durch das Dosierelement 26 eindosierten Reduktionsmittels 28 begünstigen. Der Abgasstrom wird dabei durch das elektrische Heizelement 34 vor Eintritt in den Katalysator 18 zur selektiven, katalytischen Reduktion von Stickoxiden aufgeheizt, um eine für die selektive, katalytische Reduktion ideale Temperatur zu erreichen.

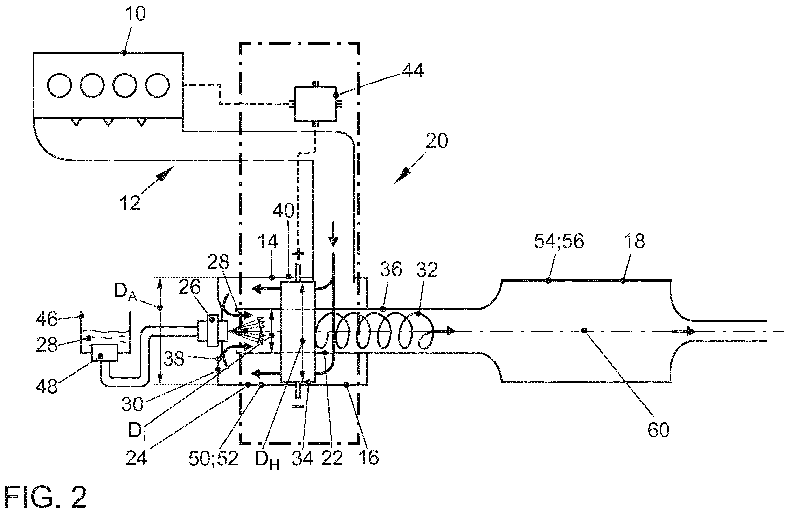

In Figur 2 ist ein Ausführungsbeispiel einer erfindungsgemäßen Abgasnachbehandlungsbaugruppe 20 dargestellt. Bei im Wesentlichen gleichem Aufbau wie zu Figur 1 beschrieben ist das elektrische Heizelement 34 bei diesem Ausführungsbeispiel nicht an der Mischstrecke 32 zwischen dem Ringkatalysator 16 und dem Katalysator 18 zur selektiven, katalytischen Reduktion von Stickoxiden angeordnet, sondern in den Ringkatalysator 16 integriert. Dabei ist das elektrische Heizelement 34 als Heizscheibe ausgebildet, welche einen Durchmesser D_{H} aufweist, welcher im Wesentlichen dem Außendurchmesser D_{A} des ringförmigen Strömungsquerschnitts 24 des Ringkatalysators 16 entspricht und somit eine Fixierung an dem Gehäuse 40 des Ringkatalysators 16 erleichtert. Das elektrische Heizelement 34 weist vorzugsweise eine äußere und eine innere Heizzone auf, wobei die äußere Heizzone der katalytische wirksamen Struktur in dem äußeren, ringförmigen Strömungsquerschnitt vorgeschaltet ist. Die innere Heizzone ist dem Katalysator 18 zur selektiven, katalytischen Reduktion von Stickoxiden vorgeschaltet und wirkt wie das unter Fig. 1 beschriebene elektrische Heizelement. Dabei ist es durch diese Anordnung möglich, den Abgasstrom vor jeweils vor Eintritt in den Katalysator 16, 18 mit einem gemeinsamen elektrischen Heizelement 34 aufzuheizen, wodurch ein weiteres Heizelement entfallen kann.

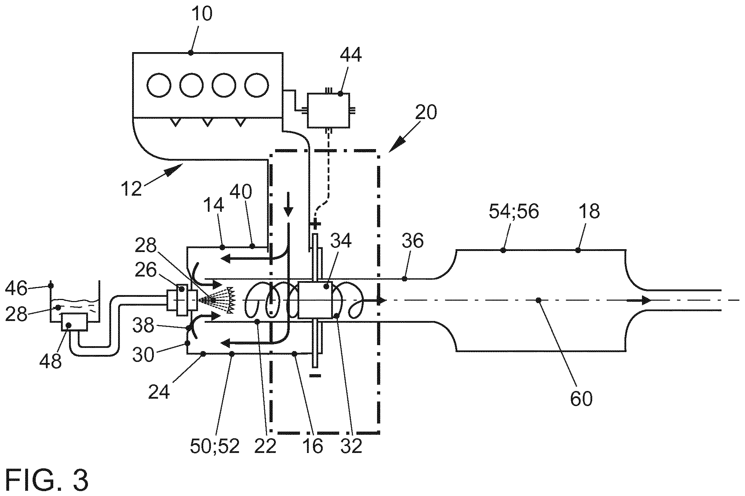

In Figur 3 ist ein Beispiel eines nicht zur Erfindung gehörigen Abgasnachbehandlungssystem 20 beschrieben. Bei im Wesentlichen gleichem Aufbau wie zu Figur 1 beschrieben, wirkt des elektrische Heizelement 34 auch in diesem Beispiel ausschließlich auf das innere, zylindrische Rohr 36 des Ringkatalysator 16, wobei das elektrische Heizelement 34 an dem Gehäuse 40 des Ringkatalysators 16 befestigt ist und somit kein zusätzliches Halteelement benötigt.

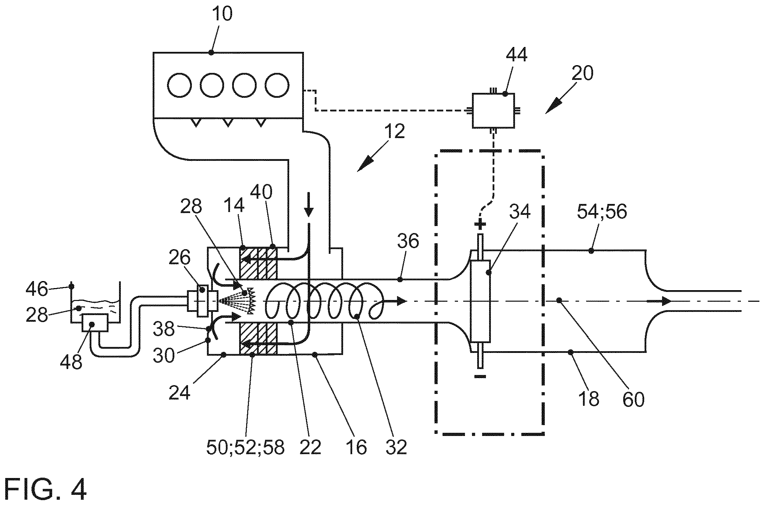

In Figur 4 ist ein weiteres Beispiel eines nicht zur Erfindung gehörenden Abgasnachbehandlungssystems 20 beschrieben. Bei im Wesentlichen gleichem Aufbau wie unter Figur 1 bis Figur 3 beschrieben, ist das elektrische Heizelement 34 bei diesem Beispiel an einem Eingang des Katalysators 18 zur selektiven, katalytischen Reduktion von Stickoxiden stromaufwärts des Filterkörpers angeordnet.

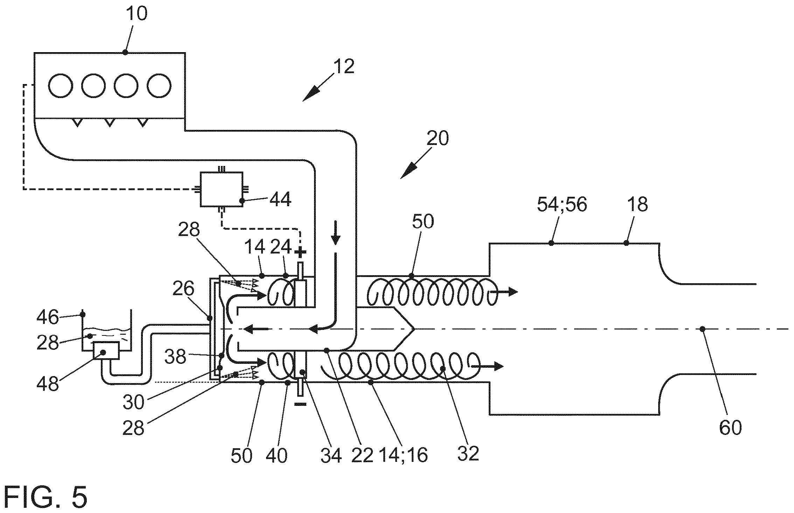

In Figur 5 ist ein weiteres Beispiel eines nicht zur Erfindung gehörenden Abgasnachbehandlungssystems 20 beschrieben. Dabei wird der Ringkatalysator 16 im Vergleich zu den vorhergehenden Beispielen in umgekehrter Strömungsrichtung durchströmt. Dabei strömt das Abgas durch eine nicht dargestellte Eintrittsöffnung an dem Gehäuse 40 des Ringkatalysators 16 senkrecht zu dem inneren, zylindrischen Strömungsquerschnitt 22 in den Ringkatalysator 16 ein und zunächst durch den inneren, zylindrischen Strömungsquerschnitt 22. Dabei weist das Dosierelement 26 eine Ringdüse auf, mit der das Reduktionsmittel in den äußeren, ringförmigen Strömungsquerschnitt eindosiert wird. Die Umlenkung des Abgasstroms erfolgt wiederum an der Stirnseite 38 des Gehäuses 40 des Ringkatalysator 16, wobei das Abgas durch den äußeren, ringförmigen Strömungsquerschnitt 24 in Richtung des Katalysators 18 zur selektiven, katalytischen Reduktion von Stickoxiden abströmt. Dabei kann das elektrische Heizelement 34 wie zu Figur 2 beschrieben scheibenförmig oder ringförmig ausgebildet sein, wobei bei einer Ringform der Abgasstrom nach dem Eindosieren des Reduktionsmittels 28 und vor Eintritt in den Katalysator 18 zur selektiven, katalytischen Reduktion von Stickoxiden aufgeheizt wird.

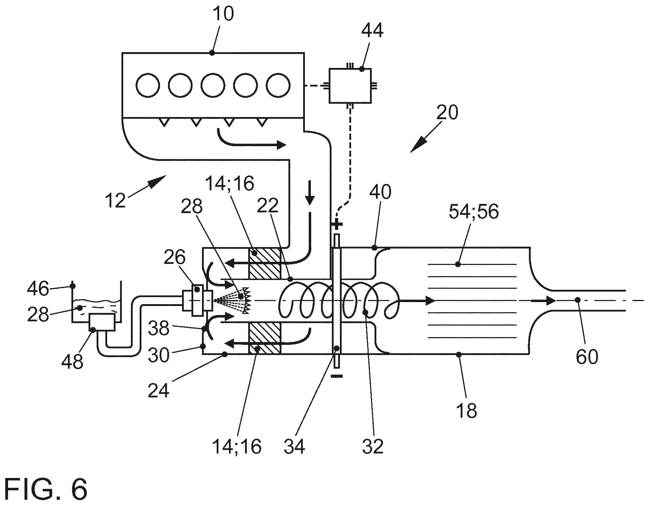

In Figur 6 ist ein weiteres Beispiel eines nicht zur Erfindung gehörigen Abgasnachbehandlungssystem 20 für einen Verbrennungsmotor 10 dargestellt. Bei im Wesentlichen gleichem Aufbau wie zu Figur 2 und Figur 3 ausgeführt, sind bei diesem Beispiel der Ringkatalysator 16 und der Katalysator 18 zur selektiven, katalytischen Reduktion von Stickoxiden in einem gemeinsamen Gehäuse 40 angeordnet.

### Bezugszeichenliste

- 10: Verbrennungsmotor
- 12: Abgasanlage
- 14: erster Katalysator
- 16: Ringkatalysator
- 18: Katalysator zur selektiven katalytischen Reduktion von Stickoxiden

- 20: Abgasnachbehandlungssystem
- 22: erster, innerer Strömungsquerschnitt (des Ringkatalysators)
- 24: zweiter, ringförmiger Strömungsquerschnitt (des Ringkatalysators)
- 26: Dosierelement
- 28: Reduktionsmittel

- 30: Umlenkelement
- 32: Mischstrecke
- 34: elektrisches Heizelement
- 36: zylindrisches Rohr
- 38: Stirnseite

- 40: Gehäuse
- 42: Abgasmischer
- 44: Steuergerät
- 46: Reduktionsmittelbehälter
- 48: Fördermodul

- 50: Oxidationskatalysator
- 52: NOx-Speicherkatalysator
- 54: SCR-Katalysator
- 56: Partikelfilter mit SCR-Beschichtung
- 58: Drei-Wege-Katalysator

- 60: Mittelachse
- D_{A}: Außendurchmesser des Ringkatalysators
- Dᵢ: Durchmesser des zylindrischen Rohrs
- D_{H}: Durchmesser des elektrischen Heizelements

## Patentansprüche

1. Abgasnachbehandlungssystem (20) für einen Verbrennungsmotor (10) zur Anordnung in einer Abgasanlage (12) des Verbrennungsmotors, umfassend einen ersten Katalysator (14) und einen in Strömungsrichtung des Abgases durch die Abgasnachbehandlungsbaugruppe (20) stromabwärts des ersten Katalysators (14) angeordneten Katalysator (18) zur selektiven, katalytischen Reduktion von Stickoxiden (SCR-Katalysator), wobei der erste Katalysator (14) als ein Ringkatalysator (16) mit einem ersten, rohrförmigen, inneren Strömungsquerschnitt (22) und mit einem zweiten, ringförmigen, äußeren Strömungsquerschnitt (24), wobei der zweite Strömungsquerschnitt (24) den ersten Strömungsquerschnitt (22) zumindest Abschnittsweise ummantelt, wobei der erste Strömungsquerschnitt (22) und der zweite Strömungsquerschnitt (24) von einem Abgasstrom des Verbrennungsmotors (10) in entgegengesetzten Strömungsrichtungen durchströmt werden, sowie mit einem Umlenkelement (30), welches den Abgasstrom durch den Ringkatalysator (16) zwischen dem ersten Strömungsquerschnitt (22) und dem zweiten Strömungsquerschnitt umgelenkt, ferner umfassend ein Dosierelement (26), mit welchem ein Reduktionsmittel (28) für den Katalysator (18) zur selektiven, katalytischen Reduktion von Stickoxiden in die Abgasanlage (12) eindosierbar ist, wobei zwischen dem Umlenkelement (30) und dem Katalysator (18) zur selektiven, katalytischen Reduktion von Stickoxiden eine Mischstrecke (32) ausgebildet ist, wobei in der Mischstrecke (32) ein elektrisches Heizelement (34) zur Aufheizung des Abgasstroms vor Eintritt in den Katalysator (18) zur selektiven, katalytischen Reduktion von Stickoxiden vorgesehen ist, wobei das Umlenkelement (30) eine Stirnseite (38) eines Gehäuses (40) des Ringkatalysators (16) ausbildet, wobei das Dosierelement (26) an der Stirnseite (38) des Gehäuses (40) des Ringkatalysators (16) angeordnet ist, wobei das Dosierelement (26) konzentrisch zu dem zylindrischen Rohr (36) an der Stirnseite (38) des Gehäuses (40) des Ringkatalysators (16) angeordnet ist, **dadurch gekennzeichnet, dass** das elektrische Heizelement (34) derart an dem Ringkatalysator (16) angeordnet ist, dass sowohl der innere Strömungsquerschnitt (22) als auch der äußere Strömungsquerschnitt (24) mit einem gemeinsamen Heizelement (34) beheizbar sind und wobei das Heizelement (34) mehrere Heizzonen aufweist, sodass für den ersten Katalysator (14) und die Mischstrecke (32) unterschiedliche Temperaturen eingestellt werden können, wobei die Heizzonen jeweils stromaufwärts der katalytisch wirksamen Zonen des ersten Katalysators (14) und des Katalysators (18) zur selektiven, katalytischen Reduktion von Stickoxiden liegen.

2. Abgasnachbehandlungssystem (20) nach Anspruch 1, **dadurch gekennzeichnet, dass** der zweite Strömungsquerschnitt (24) in Strömungsrichtung eines Abgases durch den Ringkatalysator (16) stromaufwärts des ersten Strömungsabschnitts (22) liegt.

3. Abgasnachbehandlungssystem (20) nach Anspruch 1 oder 2, **dadurch gekennzeichnet, dass** der erste Strömungsquerschnitt (22) des Ringkatalysators (16) als zylindrisches Rohr (36) ausgebildet ist, wobei der zweite, ringförmige Strömungsquerschnitt (24) konzentrisch zu dem ersten Strömungsquerschnitt (24) angeordnet ist.

4. Abgasnachbehandlungssystem (20) nach einem der Ansprüche 1 bis 3, **dadurch gekennzeichnet, dass** das elektrische Heizelement (34) scheibenförmig ausgebildet ist, wobei der Durchmesser (D_{H}) des elektrischen Heizelementes (34) im Wesentlichen dem Außendurchmesser (D_{A}) des zweiten, ringförmigen Strömungsquerschnitts (24) entspricht.

## Claims

1. Exhaust-gas aftertreatment system (20) for an internal combustion engine (10) for arrangement in an exhaust-gas system (12) of the internal combustion engine, comprising a first catalytic converter (14) and a catalytic converter (18) for the selective catalytic reduction of nitrogen oxides (SCR catalytic converter), arranged downstream of the first catalytic converter (14) in a flow direction of the exhaust gas through the exhaust-gas aftertreatment assembly (20), wherein the first catalytic converter (14) is a ring catalytic converter (16) with a first, tubular, inner flow cross section (22) and with a second, ring-shaped, outer flow cross section (24), wherein the second flow cross section (24) surrounds the first flow cross section (22) at least in certain sections, wherein the first flow cross section (22) and the second flow cross section (24) are flowed through in opposite directions by an exhaust-gas flow of the internal combustion engine (10), and having a diverting element (30) which diverts the exhaust-gas flow through the ring catalytic converter (16) between the first flow cross section (22) and the second flow cross section, furthermore comprising a dosing element (26) by means of which a reducing agent (28) for the catalytic converter (18) for the selective catalytic reduction of nitrogen oxides can be dosed into the exhaust-gas system (12), wherein a mixing section (32) is formed between the diverting element (30) and the catalytic converter (18) for the selective catalytic reduction of nitrogen oxides, wherein, in the mixing section (32), there is provided an electric heating element (34) for heating the exhaust-gas flow before it enters the catalytic converter (18) for the selective catalytic reduction of nitrogen oxides, wherein the diverting element (30) forms an end side (38) of a housing (40) of the ring catalytic converter (16), wherein the dosing element (26) is arranged at the end side (38) of the housing (40) of the ring catalytic converter (16), wherein the dosing element (26) is arranged concentrically with respect to the cylindrical pipe (36) at the end side (38) of the housing (40) of the ring catalytic converter (16), **characterized in that** the electric heating element (34) is arranged at the ring catalytic converter (16) such that both the inner flow cross section (22) and the outer flow cross section (24) are heatable by means of a common heating element (34), and wherein the heating element (34) has multiple heating zones, such that different temperatures can be set for the first catalytic converter (14) and the mixing section (32), wherein the heating zones are situated in each case upstream of the catalytically active zones of the first catalytic converter (14) and of the catalytic converter (18) for the selective catalytic reduction of nitrogen oxides.

2. Exhaust-gas aftertreatment system (20) according to Claim 1, **characterized in that** the second flow cross section (24) is situated upstream of the first flow cross section (22) in a flow direction of an exhaust gas through the ring catalytic converter (16).

3. Exhaust-gas aftertreatment system (20) according to Claim 1 or 2, **characterized in that** the first flow cross section (22) of the ring catalytic converter (16) is formed as a cylindrical pipe (36), wherein the second, ring-shaped flow cross section (24) is arranged concentrically with respect to the first flow cross section (24).

4. Exhaust-gas aftertreatment system (20) according to any of Claims 1 to 3, **characterized in that** the electric heating element (34) is of disc-shaped form, wherein the diameter (D_{H}) of the electric heating element (34) substantially corresponds to the outer diameter (D_{A}) of the second, ring-shaped flow cross section (24).

## Revendications

1. Système de post-traitement de gaz d'échappement (20) pour un moteur à combustion interne (10) destiné à être agencé dans un système d'échappement (12) du moteur à combustion interne, comprenant un premier catalyseur (14) et un catalyseur (18) pour la réduction catalytique sélective d'oxydes d'azote (catalyseur SCR) agencé en aval du premier catalyseur (14) dans la direction d'écoulement du gaz d'échappement au travers du bloc de post-traitement de gaz d'échappement (20), le premier catalyseur (14) sous la forme d'un catalyseur annulaire (16) ayant une première section transversale d'écoulement intérieure tubulaire (22) et ayant une deuxième section transversale d'écoulement extérieure annulaire (24), la deuxième section transversale d'écoulement (24) enveloppant au moins en sections la première section transversale d'écoulement (22), la première section transversale d'écoulement (22) et la deuxième section transversale d'écoulement (24) étant traversées par un courant de gaz d'échappement du moteur à combustion interne (10) dans des directions d'écoulement opposées, et ayant un élément de déviation (30), qui dévie le courant de gaz d'échappement au travers du catalyseur annulaire (16) entre la première section transversale d'écoulement (22) et la deuxième section transversale d'écoulement, comprenant en outre un élément de dosage (26), avec lequel un réducteur (28) pour le catalyseur (18) pour la réduction catalytique sélective d'oxydes d'azote (12) peut être dosé dans le système d'échappement, un segment de mélange (32) étant formé entre l'élément de déviation (30) et le catalyseur (18) pour la réduction catalytique sélective d'oxydes d'azote, un élément chauffant électrique (34) pour le chauffage du courant de gaz d'échappement avant l'entrée dans le catalyseur (18) pour la réduction catalytique sélective d'oxydes d'azote étant prévu dans le segment de mélange (32), l'élément de déviation (30) formant un côté frontal (38) d'un boîtier (40) du catalyseur annulaire (16), l'élément de dosage (26) étant agencé sur le côté frontal (38) du boîtier (40) du catalyseur annulaire (16), l'élément de dosage (26) étant agencé concentriquement au tube cylindrique (36) sur le côté frontal (38) du boîtier (40) du catalyseur annulaire (16), **caractérisé en ce que** l'élément chauffant électrique (34) est agencé sur le catalyseur annulaire (16) de telle sorte qu'aussi bien la section transversale d'écoulement intérieure (22) que la section transversale d'écoulement extérieure (24) puissent être chauffées avec un élément chauffant commun (34), et dans lequel l'élément chauffant (34) comprend plusieurs zones de chauffage, de telle sorte que des températures différentes puissent être ajustées pour le premier catalyseur (14) et le segment de mélange (32), les zones de chauffage étant situées respectivement en amont des zones catalytiquement actives du premier catalyseur (14) et du catalyseur (18) pour la réduction catalytique sélective d'oxydes d'azote.

2. Système de post-traitement de gaz d'échappement (20) selon la revendication 1, **caractérisé en ce que** la deuxième section transversale d'écoulement (24) est située en amont de la première section transversale d'écoulement (22) dans la direction d'écoulement d'un gaz d'échappement au travers du catalyseur annulaire (16) .

3. Système de post-traitement de gaz d'échappement (20) selon la revendication 1 ou 2, **caractérisé en ce que** la première section transversale d'écoulement (22) du catalyseur annulaire (16) est configurée sous la forme d'un tube cylindrique (36), la deuxième section transversale d'écoulement annulaire (24) étant agencée concentriquement à la première section transversale d'écoulement (24).

4. Système de post-traitement de gaz d'échappement (20) selon l'une quelconque des revendications 1 à 3, **caractérisé en ce que** l'élément chauffant électrique (34) est configuré en forme de disque, le diamètre (D_{H}) de l'élément chauffant électrique (34) correspondant essentiellement au diamètre extérieur (D_{A}) de la deuxième section transversale d'écoulement annulaire (24) .
